Europäisches Patentamt

European Patent Office

Office européen des brevets

(11) Publication number: **0 388 821**
**A2**

## EUROPEAN PATENT APPLICATION

(21) Application number: **90105044.3**

(22) Date of filing: **17.03.90**

(51) Int. Cl.⁵: **G01N 27/90**

(30) Priority: **23.03.89 SE 8901037**

(43) Date of publication of application:
**26.09.90 Bulletin 90/39**

(84) Designated Contracting States:
**AT DE FR GB IT**

(71) Applicant: **TÖRNBLOMS
KVALITETSKONTROLL AB
Vikhus Rytterne
S-725 92 Västeras(SE)**

(72) Inventor: **Törnblom, Bengt Hjalmar,
Vikhus Rytterne
S-725 92 Västeras,(SE)**

(74) Representative: **Boecker, Joachim, Dr.-Ing.
Rathenauplatz 2-8
D-6000 Frankfurt a.M. 1(DE)**

(54) **Method for testing and/or measuring by means of a fluxgenerating sub-device.**

(57) The invention describes a method and a device for testing and/or measuring by means of a flux-generating sub-device for the generation of a flux configuration, for example flux maxima, which is movable relative to a flux-generating sub-device (1). By rotating a ferrite rod (2) at a constant distance to the winding of a circular surface transducer coil (1), the electrical impedance of the coil, at the relevant carrier frequencies, is largely constant when no test object is present adjacent the coil. When the coil (1) and the ferrite rod (2), rotating inside the coil, have been placed above the surface of an electrically conducting test object (3), eddy currents are induced in the surface layer which currents largely follow the magnetic flux and its intensity. Because the flux inside the coil is concentrated through the ferrite rod (2), which rotates along a path (9), eddy current maxima will occur below the ferrite rod and follow the revolution path (9) of the ferrite rod. When a surface crack (12) is passed by the eddy current maximum, the propagation of the eddy currents, and hence also the impedance of the coil, are disturbed to a maximum extent, whereby the crack can be detected in spite of the fact that the coil (1) may be stationary relative to the crack. In this way there is no need to influence the signal conductors to the transducer with the frequency of the flux rotation, which is a great advantage.

FIG. 1

FIG. 2

## Method for testing and/or measuring by means of a flux-generating sub-device

The present invention relates to a method for testing and/or measuring by means of a flux-generating sub-device according to the precharacterising part of claim 1.

The invention is primarily related to the field of testing and/or measuring, for example detection of cracks, with the aid of eddy current technique or which is based on eddy current technique.

Methods and devices based on currently known technique, in which movable fields occur, are described, inter alia, in the SE-A-85 00 065 and SE-A-85 03 894. A more sophisticated method is described in SE-A-87 00 472. The disadvantage of the former applications is that special signal transmission arrangements are required because the active transducer coil rotates in a path across the test object. This increases the complexity with resultant problems with, for example, price, strength, service, and in particular the signal transmission to the transducer coil.

The invention aims at developing a method for testing and/or measuring by means of a flux-generating sub-device of the above-mentioned kind which does away with the need to rotate the flux-generating sub-device and the signal transmission problems associated therewith while delivering at the same time powerful and distinct test signals or measuring signals. The invention also relates to a device for carrying out the method.

To achieve this aim the invention suggests a method for testing and/or measuring by means of a flux-generating sub-device according to the introductory part of claim 1, which is characterized by the features of the characterizing part of claim 1.

A device for carrying out the method according to the invention is characterized by the features of claim 2.

Further developments of the device according to the invention are characterized by the features of the additional claims 3 to 11.

The idea of the invention is to generate a movable flux, preferably a magnetic flux, without the flux-generating sub-device having to move in the same path of movement as the flux or flux configuration. In this way, complicated signal transmissions are avoided. Both surface transducers and annular transducers may advantageously be supplemented according to the invention.

By way of example, the invention - both the method and the device - will now be described in greater detail with reference to the accompanying drawings showing in

Figure 1 a device according to the invention seen from the side and from above,

Figure 2 and 3 variations of Figure 1,

Figure 4 the shape of the output-signal curve, and

Figure 5 a practical embodiment of the invention.

The terminology corresponds to that which is used in previous patent documents relating to eddy current testing, in which the invention deals with the same technique as in the present case.

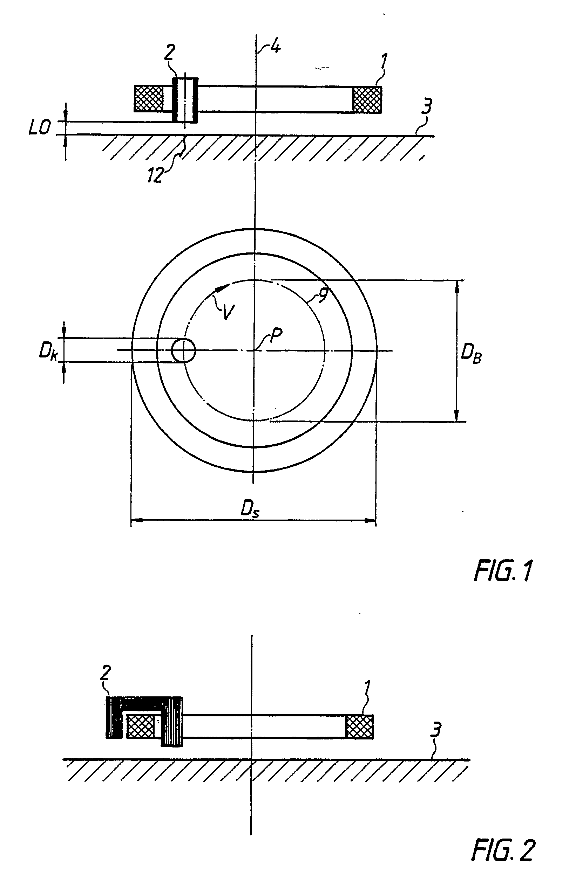

Figure 1 shows a coil 1 which is located over a metal surface 3. The coil 1, which is fed with alternating current, can also, if suitable, move across the metal surface 3. The coil 1 is circular, i.e. fully rotationally symmetrical around its centre point P. Because the coil 1 is supplied with current, it generates a magnetic field, for example of the type which is describes in the SE-A-75 07 857, SE-A-83 02 738, SE-A-84 00 698, and others. Thus, the coil 1 can be regarded as a magnetic flux-generating sub-device. The coil 1 may advantageously be both a generator of magnetic fields and/or a receiver of signals generated by magnetic fields or by variations in magnetic fields.

Inside the coil 1, there is a rotating flux-influencing sub-device 2. This device 2 may, for example, consist of a material with a good magnetic conductivity, for example a ferrite rod having high magnetic permeability. In principle, also a short-circuited electrical conductor winding or, for example, a copper washer could be used, but in that case serving as a flux-deteriorating sub-device.

Because the ferrite rod 2 moves along a circular path 9 around the centre of rotation P of coil 1, the impedance of coil 1 will be constant when no test object 3 is present. The coil 1 is insensitive to the position of rotation of the ferrite rod 2 as long as the magnetic coupling (coupling factor) between the coil and the ferrite rod is constant, which it is at a constant distance between the coil 1 and the rod 2. The rod 2 is, per se, rotationally symmetrical and is always at a constant distance to the nearest point of the coil 1, the latter also being fully rotationally symmetrical. As will be clear, the centre line 4 is the same for the revolution path 9 as for the coil 1.

When an electrically conducting test object 3 is present, currents are induced in the surface layer of the test object 3 which influence the impedance of the coil 1. Of course, this influence on the impedance is greatest where the flux is greatest. In the exemplified case, the flux is greatest immediately below the ferrite rod 2, where the flux is concentrated because the ferrite conducts the magnetic flux in the order of magnitude of more than 10 times better than air. If a crack is present on the surface of the test object 3, this will affect the field configuration because it provides an obstacle to the flow of eddy currents in the surface layer 3 driven by the voltage induced in this surface layer. In this way, the impedance of the coil 1 is influenced.

In other words, the influence of the crack or other flaw 12 on the impedance of the coil 1 is greatest when the ferrite rod 2 passes directly over the flaw. The ferrite rod 2 moves at a rate of V, which may be high. This means that the crack is crossed by the movable flux concentration and can thus be detected in spite of the fact that the coil 1 may be stationary if this is suitable. A consequence of the flux concentration is that shorter cracks can be detected, since, of course, a crack with a small length may still disturb a considerable part of the flux because of the concentration of the flux passing through the coil 1 via the ferrite rod 2.

Because the concentrated flux moves along a circular path 9, the majority of cracks can be detected irrespective of their orientation in the surface plane since always some part of the rotary path crosses the cracks, which is favourable from the point of view of detection.

Reference is also made to the SE-A-86 01 785, describing the advantages of the field crossing the crack and other possibilities resulting therefrom. The same advantages are obtainable with the present invention. When a conventional surface transducer coil moves along a long crack, this crack often gives rise to only small flux variations and/or too low variations in frequency. If the transducer is completed with a ferrite rod, however, which rotates in the manner described here, the crack is detected without problems. In a similar manner, so-called edge cracks on a billet may be detected because the flux maxima cross the cracks.

In the practical case the coil 1 may either be stationary or be in motion, which depends on the respective application.

Figure 2 shows how the flux concentration may be increased by allowing the ferrite rod to surround the coil winding 1 to a certain extent.

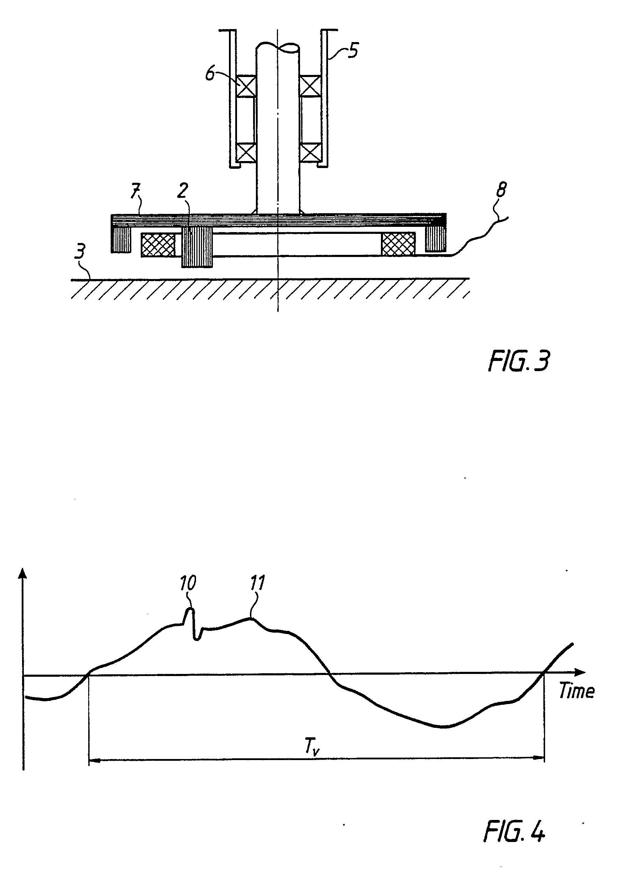

Figure 3 shows how the ferrite rod 2 is mounted on a ferrite plate 7, which in turn is mounted on a shaft which is journalled by means of bearings 6 in, for example, a movable foundation 5. From Figure 3 it is also clear how the leads 8 to the coil can be drawn.

As drive device for the device shown in Figure 3, it is possible to use, for example, an air turbine. The ferrite rod 2 can also be formed as a round ball rolling in a circular path, and so on. In case of a hot test material, the transducer arrangement is suitably cooled by water. It should be noted that the concept "transducer" is to be construed in a broad manner, which also includes so-called sensors and the like.

Figure 4 shows a possible appearance of the output signal derived from the coil 1 after signal processing. A low-frequency fundamental wave (tone) is seen at 11, which derives from the rotation of the ferrite rod 2. The time $T_v$ corresponds to one revolution of the ferrite rod 2. Superimposed on the fundamental wave 11 is a signal 10 of a higher frequency, which derives from the crack when the ferrite rod 2 passes over the same. By making the ratio $D_B/D_K$ (Figure 1) large, the frequency ratio between the fundamental wave 11 and the superimposed wave pulse signal 10 is at the same time increased, thus improving the possibilities of separating the signal 10 from the output signal.

The curve shape shown in Figure 4 can be markedly improved by, for example, obtaining a synchronization position on the revolution 9. In this way it is easy to suppress the low-frequency fundamental wave signal 11 by balancing out the fundamental wave signal with a simulated/artificial fundamental wave signal, which is then given the correct phase position by synchronization with the revolution.

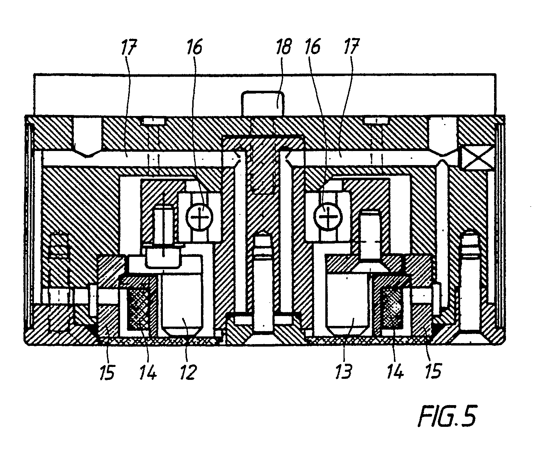

Figure 5 shows a practical embodiment of the invention, in which 12 and 13 are rotatable ferrite rods. 14 is a non-rotatable coil and 15 is a fixed ferrite ring. 16 is the rotary bearing and 17 designates cooling water channels. The drive device 18 is only indicated and consists of obliquely drilled channels for air, which drive the rotatable part with the ferrite rods 12, 13.

The filtering can suitably be performed as described in the SE-B-82 06 678.

As will be clear, the invention makes it possible, with the aid of simple, "passive" movable devices such as, for example, a ferrite rod, to generate movable field configurations in a simple manner while at the same time the impedance-influenced coil 1 may remain stationary. In this way, signal conductors may be arranged in a fixed manner, thus making, for example, slip rings or other signal transmission devices redundant.

A relative motion over, for example, the surface 3 may be imparted to the entire transducer arrangement, for example according to Figure 3, if this is suitable for surface scanning reasons and the like.

The invention is primarily intended for so-called eddy current testing, but may be used to advantage also for so-called leakage field testing, which is covered by the invention.

In eddy current testing the invention allows, for example, increasing the dimension of the surface transducer coil, thus obtaining a greater degree of surface coverage, which reduces the speed requirements on transducer manipulators if any. This should be considered in relation to an ordinary surface transducer coil.

The magnetic flux-generating sub-device, i.e. the coil 1, has, for example in the case of eddy current testing, an impedance (see, e.g., **SE-B-83 02 738 and SE-PS 84 00 698) which is dependent on the eddy currents induced in the test object 3. Since the major part of the flux interlinked with coil 1 finds its way to the ferrite rod 2 because of the good magnetic conductivity of this rod, the impedance variations of the coil 1, of which the crack signal is one, will largely be determined by the eddy currents which are induced below the ferrite rod 2.

The problems with lift-off, LO in Figure 1, etc., are the same as in conventional eddy current testing and can be coped with by using more than one carrier frequency. The majority of electrically conducting or flux-conducting materials can be tested and/or measured according to the invention and are embraced by the term "test object". This also applies to powders and liquids etc.

The embodiments described above are to be considered only as a few of many feasible examples of the invention. The invention, both the method and the device, as well as the applications thereof, can be varied in many ways within the scope of the following claims.

## Claims

1. Method for testing and/or measuring, for example detecting a test object (3), such as a hot steel blank, with respect to a quantity, for example a surface crack, by utilizing at least one directly or indirectly flux-generating sub-device, for example a rotationally symmetrical surface transducer coil, and at least one flux-influencing sub-device, **characterized** in that the flux-influencing sub-device (2), which completely or partially consists of ferrite or any other material of high magnetic permeability/conductivity, is moved relative to the flux-generating sub-device (1) so as to obtain a movable flux, whereby a quantity and/or a combination of quantities can be tested and/or measured in a better way.

2. Device for carrying out the method according to claim 1, intended for testing and/or measuring, for example detecting test object (3), such as a hot steel blank, comprising at least one directly or indirectly flux-generating sub-device (1), for example a rotationally symmetrical surface transducer coil, and at least one flux-influencing sub-device, **characterized** in that the flux-influencing sub-device completely or partially consists of ferrite or any other material of high magnetic permeability/conductivity, and that the flux-influencing sub-device (2) is completely or partially movable relative to the flux-generating sub-device (1), so as to obtain a movable flux, whereby a quantity or a combination of quantities can be tested and/or measured in a better way.

3. Device according to claim 2, **characterized** in that at least the flux-influencing sub-device is adapted to move along a path which is symmetrical in relation to the flux-influencing sub-device, for example rotationally symmetrical inside an annular transducer coil where the centre of rotation of the flux-influencing sub-device and the centre (4) of the annular transducer coil largely coincide.

4. Device according to any of claims 2 or 3, **characterized** in that the flux-influencing sub-device is adapted to move along a path (9) which does not significantly disturb the electrical impedance of the flux-generating sub-device when no test object is present.

5. Device according to any of claims 2-4, **characterized** in that the flux-generating sub-device (1) has a round or circular shape as, for example, a round surface transducer coil or an annular coil.

6. Device according to any of the preceding claims 2-5, **characterized** in that the flux-influencing sub-device is adapted to move along a circular path.

7. Device according to any of the preceding claims 2-6, **characterized** in that signals, directly or indirectly obtained or generated by means of the movable flux generated by the flux-influencing sub-device (2), are adapted to be filtered with respect to the frequency contents caused by a quantity because of the movable flux.

8. Device according to any of the preceding claims 2-7, **characterized** in that the flux-influencing, for example flux-concentrating, sub-device (2) partially surrounds part of the flux-generating sub-device (1).

9. Device according to any of the preceding claims 2-8 , **characterized** in that the dimension, $D_K$, of the flux-influencing sub-device in its direction of movement is small in relation to the diameter, $D_B$, of its path of movement, so that the ratio $D_B/D_K$ is greater than 2.

10. Device according to any of the preceding claims 2-9, **characterized** in that a quantity, for example a crack, is to be tested and/or measured, completely or partially, directly or indirectly, as a function of the impedance of the flux-generating sub-device, for example a circular coil transducer, the impedance of which is dependent on the flux-influencing sub-device.

11. Device according to any of the preceding claims 2-10, **characterized** in that the test object (3) has a round cross section.

FIG.1

FIG.2

FIG.3

FIG.4

FIG.5